# EUROPEAN PATENT APPLICATION

(11) **EP 1 767 850 A1**
(43) Date of publication of application: **28.03.2007**
(21) Application number: 05425667.2
(22) Date of filing: 23.09.2005
(51) Int. Cl.: F21V 29/02, A47F 3/00, G02B 6/00

(54) **Improved lighting device for a display case and display case comprising such device**

(71) Applicant: Goppion S.p.A., 20090 Trezzano sul Naviglio (MI) (IT)
(72) Inventor: Goppion, Alessandro, 20144 Milano (IT)
(74) Representative: Checcacci, Giorgio

(57) **Abstract**

A lighting device (100) for a display case comprises a lighting body (1a,1b) and a common end (2a,2b) of an optical fibre bundle (3a,3b) optically connected to said lighting body (1a,1b). The lighting device (100) further comprises a box (7) which encloses the lighting body (1a,1b) and the common end (2a,2b), and aeration means (9,10,71a,71b,72,73a,73b,74,720,740) provided for the passage of at least one air flow (AF1, AF2) through the box (7) for absorbing heat emitted by the lighting body (1a,1b) and by the common end (2a,2b) and for the transfer of said at least one air flow (AF1, AF2) outside the display case.

It is also described a display case comprising a lighting device (100) of the type described above.

## Description

The present invention refers, in a first aspect thereof, to a lighting device for a display case, in particular a display case for museums or other temporary or permanent exhibition spaces.

In a second aspect thereof, the invention refers to a display case comprising such lighting device.

Display cases for museums, especially when intended for precious and fine art objects, must ensure both display to the public in safe conditions for the objects themselves and maintenance of such objects in controlled climatic conditions, where parameters such as temperature, humidity level, presence of dust or polluting gases etc. are monitored and maintained within pre-established values, in order to guarantee the best preservation conditions.

The display needs often require that display cases are provided with their own lighting devices, to better enhance the display of the presented objects and/or to compensate for particular limited lighting conditions, whether natural or artificially created, of the exhibition space where the display cases are situated.

The use of lighting devices inside display cases requires however particular care, since such lighting device also represents an undesired heat source which may affect the controlled climatic conditions within the display case.

One known solution for avoiding this drawback, illustrated for example in patent application DE 41 19 975, is to place a lighting body, representing the main heat source in the lighting device, outside the display case itself and supply the lighting in the desired positions of the display case through optical fibres optically connected with the external lighting body.

Nevertheless, in some cases it is not possible to place the lighting body outside the display case to be illuminated, for example due to constraints in the exhibition spaces (often set in historical buildings or in buildings of high architectural value), or due to the position of the display case in such spaces. In these cases the lighting body is typically housed in a technical space defined in the display case and suitably separated from the display volume where the controlled climatic conditions are maintained. The lighting of the display volume may be direct or may occur through the use of optical fibres, as described above. In any case it should be avoided as much as possible that the heat dispersed by the lighting body is transferred to the display volume, altering the optimal climatic conditions.

Patent application JP20010114940 describes a lighting device for the lighting of an optical fibre bundle, employable in the lighting of a display case. In such device a lighting body, housed in a technical space of the display case defined in the base thereof, comprises a light source which may be optically connected with the common end of the optical fibre bundle. The light source is enclosed in a casing provided with an opening for the removal, with the aid of a fan placed inside the casing, of the air heated by the light source. At such opening, outside the casing, a duct is provided which allows the heated air to be directed towards the inside or outside of the technical space of the display case, to avoid the overheating of such space.

The Applicant has noted that even employing lighting devices of the type just described above there remains the danger of affecting the controlled climatic conditions of the display volume with undesired temperature increases, due to the heat in any case dispersed through the casing of the lighting body and the heat emitted by the common end of the optical fibre bundle connected with the lighting body. This may happen above all in configurations where the illuminating body is placed below the display volume, due to the natural upward convective motions of warmer air.

The technical problem underlying the present invention is that of providing a lighting device for a display case which may be completely contained in the display case and substantially avoids the heat dispersion towards the display volume wherein controlled climatic conditions must be maintained.

The present invention refers therefore, in a first aspect thereof, to a lighting device for a display case according to claim 1, and, in a second aspect thereof, to a display case comprising such lighting device according to claim 18. Preferred characteristics are outlined in the dependent claims.

In particular, in the first aspect thereof, the invention refers to a lighting device for a display case comprising a lighting body and a common end of an optical fibre bundle optically connected to said lighting body, characterised in that it comprises:
- a box which encloses said lighting body and said common end, and
- aeration means provided for the passage through said box of at least one air flow for absorbing heat emitted by said lighting body and by said common end and for the transfer of said at least one air flow outside the display case.

Advantageously, the heat emitted by the lighting body and by the common end of the optical fibre bundle connected thereto is substantially confined within the space delimited by the box. Through the aeration means it is possible to continuously remove such heat from the box and transfer it in a controlled way outside the display case, substantially avoiding that it is dispersed towards the display volume where controlled climatic conditions must be maintained.

Thanks to the configuration described above, the lighting device of the invention may be situated in any point of the display case, substantially without there being the danger that the aforementioned heat is transferred, even partially, by convection to the display volume. In particular, the lighting device of the invention may be also situated in a space of the display case under the display volume, for example a technical space defined in a base of the display case.

It shall also be observed that the lighting device of the invention allows to obtain the above described advantages in a constructively simple way, in particular with the use of conventional, commonly available lighting bodies.

Preferably, the aeration means comprise a first input aeration vent and a first output aeration vent formed in the box, for the passage of a first of said at least one air flow therethrough.

Preferably, the aeration means comprise a first output aeration duct for connecting the first output aeration vent with the outside of the display case. In this way, the first of said at least one air flow, heated as it passes through the box, may be easily conveyed outside the display case without constraining the arrangement of the box therein. In the case where such box may be positioned inside the display case so that the first output aeration vent is situated in contact with a perimeter wall of the display case, the output aeration duct may be absent, as the first output aeration vent can be placed directly in fluid communication with the outside of the display case.

Preferably, the aeration means comprise a first ventilating device at the first output aeration vent. This advantageously allows the air flow rate through the box to be increased, other conditions being equal, and therefore improves the removal of heat from it.

The first input aeration vent is formed in the box preferably in proximity to an opening for the passage of said optical fibre bundle, in order to advantageously allow the first of said at least one air flow, upon entering the box, to directly touch the common end of the optical fibre bundle, thus enhancing the cooling thereof.

Preferably, the lighting body comprises a light source, a casing and a pair of cooling openings formed in the casing for the cooling of the light source, and the aeration means comprise a second input aeration vent and a second output aeration vent formed in the box and in fluid communication with said pair of cooling openings for the passage through said box and said casing of a second of said at least one air flow. Advantageously, the second of said at least one air flow is intended in particular for directly removing the heat emitted by the light source of the lighting body, which represents the primary heat source in the lighting device.

The cooling openings formed in the casing of the lighting body are preferably connected to the second input aeration vent and to the second output aeration vent through connection ducts, so that the second of said at least one air flow follows through the box a substantially guided path, that independent from the first of said at least one air flow.

Preferably, the aeration means comprise a second output aeration duct for connecting the second output aeration vent with the outside of the display case. In this way, also the second of said at least one air flow, heated as it passes through the box and the casing of the lighting body, may be easily conveyed outside the display case without constraining the arrangement of the box within the display case. Similarly to what described above with reference to the first output aeration duct, also the second output aeration duct may in any case be absent, if the arrangement of the box inside the display case makes it possible.

Preferably, the aeration means comprise a second ventilating device at the second output aeration vent.

In another preferred embodiment of the invention, the lighting device comprises two lighting bodies and two common ends of two optical fibre bundles optically connected to the two lighting bodies, and the aeration means comprise two first input aeration vents and one first output aeration vent formed in the box for the passage of a first of said at least one air flow therethrough.

Preferably, the aeration means comprise a first output aeration duct for connecting the first output aeration vent with the outside of the display case.

Preferably, the aeration means comprise a first ventilating device at the first output aeration vent.

Preferably, the two first input aeration vents are formed in the box in proximity to openings for passage of the two optical fibre bundles.

Preferably, the two lighting bodies comprise respective light sources, respective casings and respective pairs of cooling openings formed in said casings for the cooling of the light sources, and the aeration means comprise two second input aeration vents and one second output aeration vent formed in the box and a manifold, said two second input aeration vents and said manifold being in fluid communication with the pairs of cooling openings formed in the casings and said second output aeration vent being in fluid communication with said manifold for the passage through said box and said casings of a second of said at least one air flow.

The cooling openings formed in the casings of the lighting bodies are preferably connected with the two second input aeration vents and with the manifold through connection ducts. Also the second output aeration vent is preferably connected to the manifold through a connection duct. In this way the passage of the second of said at least one air flow in the box is substantially guided and independent from the first of said at least one air flow.

Preferably, the aeration means comprise a second output aeration duct to connect the second output aeration vent with the outside of the display case.

Preferably, the aeration means comprise a second ventilating device at the second output aeration vent.

The embodiment with two lighting bodies makes available an increased lighting power against a constructive complexity that is substantially the same as that of the embodiment having only one lighting body. The preferred characteristics outlined with reference to the embodiment with two lighting bodies allow to obtain advantages analogous to those deriving from the corresponding preferred characteristics of the embodiment having only one lighting body.

Preferably, the box which encloses the lighting body (bodies) and the common end(s) of the respective optical fibre bundle(s) is thermally insulated, in order to advantageously avoid heat dispersions through the walls of the box itself.

The box preferably comprises a removable cover in order to allow the components placed therein to be easily accessed.

In a second aspect thereof, the present invention refers to a display case comprising a lighting device having the described characteristics. Such a display case has all of the advantageous features discussed above with reference to the lighting device of the invention.

Preferably, the display case comprises a display volume defined above a base and the aforementioned lighting device is housed in the base.

Further characteristics and advantages of the present invention shall become clearer from the following detailed description of preferred embodiments thereof, made hereafter, for indicating and not limiting purposes, with reference to the attached drawings. In such drawings:
- Figure 1 is a perspective view with partially removed parts of a lighting device according to a first preferred embodiment of the invention;
- Figure 2 is a top view of the lighting device of figure 1, without cover;
- Figure 3 is a perspective view with partially removed parts of a lighting device according to a second preferred embodiment of the invention;
- Figure 4 is a top view of the lighting device of figure 3, without cover;
- Figure 5 is a perspective view of a display case comprising the lighting device of figure 1;
- Figure 6 is a side sectional view of the display case of figure 5.

In such figures, with reference numeral 100is wholly indicated a lighting device according to the invention for a display case 200.

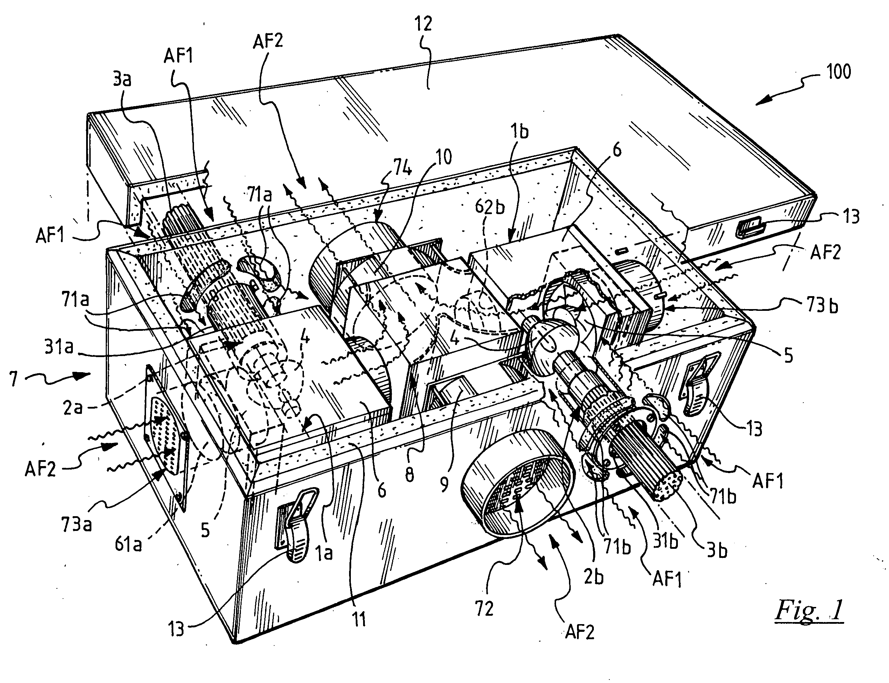

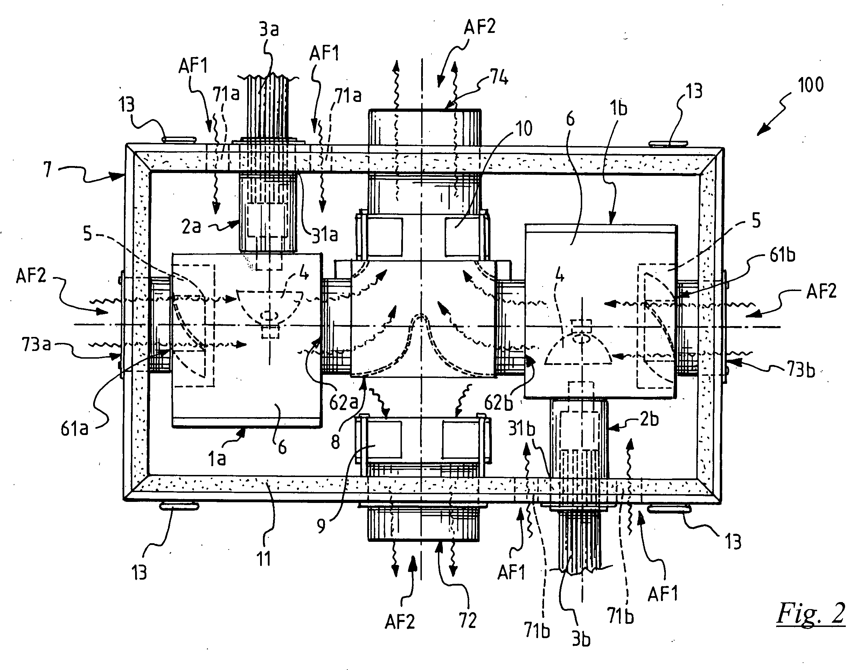

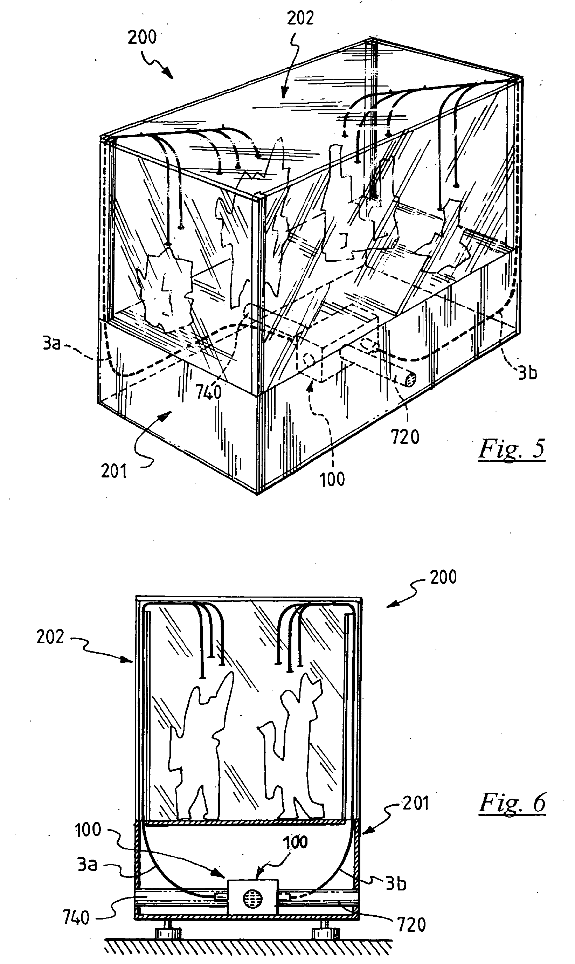

In a first preferred embodiment of the invention, shown in detail in figures 1 and 2, the lighting device 100 comprises two lighting bodies 1a, 1b and two common ends 2a, 2b of respective optical fibre bundles 3a, 3b, which optical fibres are provided for lighting a display volume 201 of the display case 200, as illustrated more in detail below with reference to figures 5 and 6.

The lighting bodies 1a, 1b may have the same or different features, e.g. in terms of dimensions and/or lighting power, but they are in any case of conventional type and known to those skilled in the art. In the embodiment illustrated in figures 1 and 2, the lighting bodies 1a, 1b are equal to each other and each comprises essentially a light source 4, for example a spotlight with halogen lamp, and a cooling fan 5 enclosed in a casing 6. On the walls of each casing 6 a pair of cooling openings 61a, 62a and 61b, 62b are defined, of which a first at the cooling fan 5 and a second opposite the first with respect to the light source 4.

The common ends 2a, 2b of the optical fibre bundles 3a, 3b are removably fixed at the light sources 4 of the lighting bodies 1a, 1b, so as to achieve an optical connection between such light sources and the optical fibre bundles, in a way known to those skilled in the art.

According to the invention, the lighting bodies 1a, 1b and the common ends 2a, 2b of the optical fibre bundles 3a, 3b are enclosed in a box 7 comprising aeration means provided for the passage therethrough of at least one air flow suitable for absorbing heat emitted by the lighting bodies 1a, 1b and the common ends 2a, 2b of the optical fibre bundles 3a, 3b, and for the transfer of such air flow outside the display case 200.

In the preferred embodiment illustrated in figures 1 and 2, the aeration means comprise two first input aeration vents 71a, 71b and one first output aeration vent 72 formed in the box 7 so as to allow the passage of a first air flow AF1 therethrough, and two second input aeration vents 73a, 73b and one second output aeration vent 74 formed in the box 7 so as to allow the passage of a second air flow AF2 through the box 7 and through the casings 6 of the lighting bodies 1a, 1b.

The first input aeration vents 71a, 71b are defined in proximity to openings 31a, 31b for the passage of optical fibre bundles 3a, 3b, so that the input of the first air flow AF1 occurs as much as possible in proximity to the common ends 2a, 2b of the optical fibre bundles 3a, 3b. These aeration vents may be made of one or more slits formed circularly around the openings 31a, 31b, or in alternative embodiments not illustrated, they may be defined at the openings 31a, 31b themselves, when such openings have a greater diameter than that of the optical fibre bundles 3a, 3b which must be inserted therethrough.

The second input aeration vents 73a, 73b are placed in fluid communication with the cooling openings 61a and 61b of the lighting bodies 1a and 1b defined in the casings 6 at the cooling fans 5. The second output aeration vent 74 is placed in fluid communication with a manifold 8, arranged in the box 7 between the two lighting bodies 1a, 1b and in turn in fluid communication with the cooling openings 62a and 62b of the lighting bodies 1a and 1b.

The connection between the second input aeration vents 73a, 73b, the casings 6, the manifold 8 and the second output aeration vent 74 is typically obtained by means of rigid or flexible connection ducts, in any case of conventional type.

The aeration means further comprise ventilating devices 9 and 10 provided inside box 7, respectively at the first and second output aeration vent 72 and 74.

The second input aeration vents 73a, 73b, the first output aeration vent 72 and the second output aeration vent 74 are preferably provided with protection grids in order to prevent foreign matters from reaching the cooling fans 5 of the lighting bodies 1a, 1b and the ventilating devices 9 and 10.

The first air flow AF1, entered into the box 7 through the first input aeration vents 71a, 71b, freely circulates therein, touching the common ends 2a, 2b of the optical fibre bundles 3a, 3b and the casings 6 of the lighting bodies 1a, 1b and removing heat from these components, before exiting at the first output aeration vent 72. This is placed in fluid communication, directly or by means of a first output aeration duct 720, with the outside of the display case 200, so that the heat absorbed by the first air flow AF1 is substantially transferred outside the display case 200 (see figures 5 and 6).

The second air flow AF2 instead preferably follows a fixed path within the box 7. Entering the box 7 through the second input aeration vents 73a, 73b, it gives rise to two partial flows which are respectively directed, by means of connection ducts, inside the casings 6 of the lighting bodies 1a e 1b, where they directly remove the heat emitted by the light sources 4. The entry of the partial flows of the second air flow AF2 in the lighting bodies 1a and 1b occurs at the cooling openings 61a and 61b, where the cooling fans 5 are active. These may advantageously contribute to air recall from outside the box 7, so that adequate air flow rates are maintained for the cooling of the light sources 4. The two partial flows of second air flow AF2, exiting from the casings 6, are directed through connection ducts to the manifold 8 and from this to the second output aeration vent 74. The inner walls of the manifold 8 are preferably shaped so to facilitate the mixing of the two secondary flows and direct them towards the second output aeration vent 74. The latter, as the first output aeration vent 72, is placed in fluid communication, directly or by means of a second output aeration duct 740, with the outside of the display case 200, so that the heat absorbed by the second air flow AF2 is substantially transferred outside the display case 200 (see figures 5 and 6).

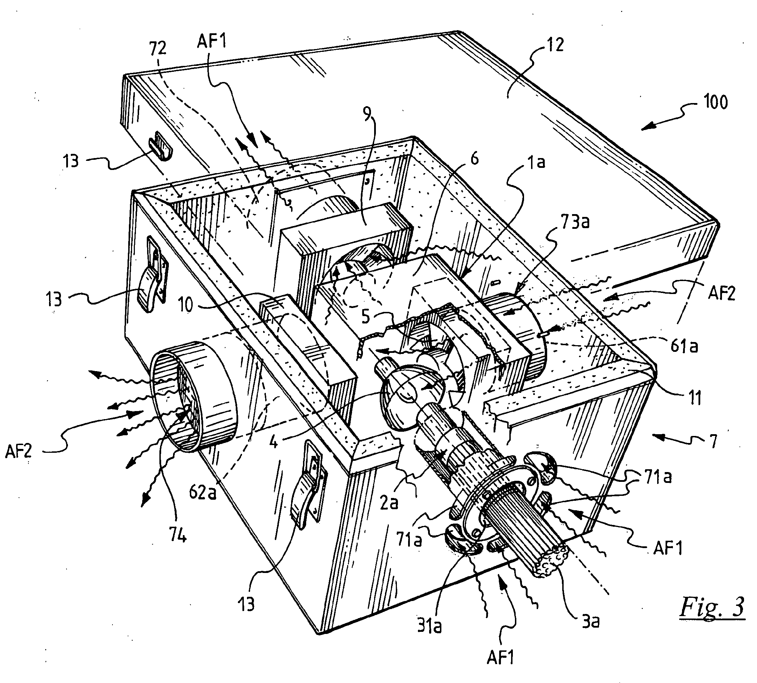

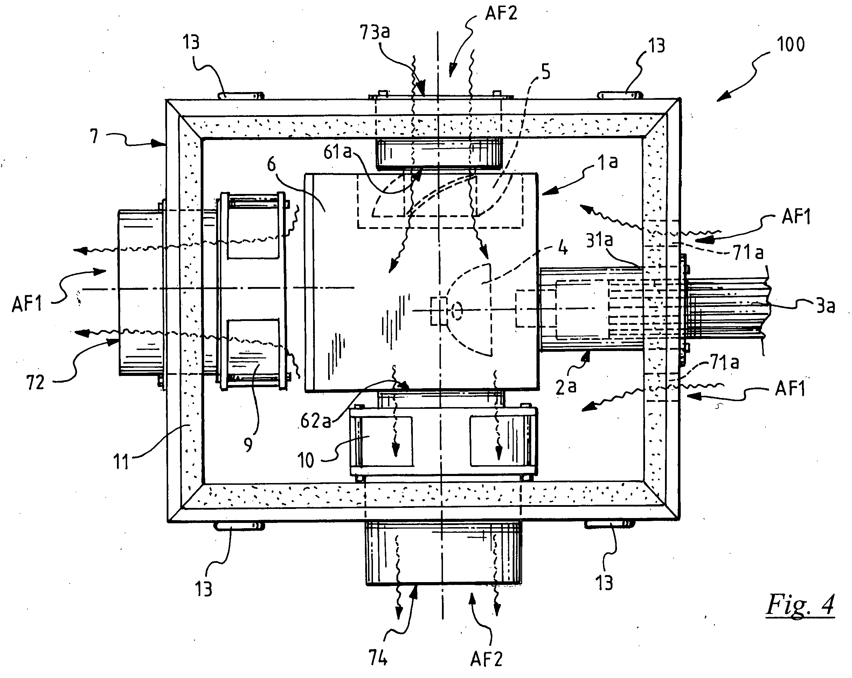

In another preferred embodiment of the invention, shown in detail in figures 3 and 4, the lighting device 100 comprises only one lighting body, e.g. the lighting body 1a. In this embodiment, only the first input aeration vent 71a, the first output aeration vent 72, the second input aeration vent 73a and the second output aeration vent 74 are formed in the box 7. Within the box 7, at the first and second input aeration vent 72 and 74, the ventilating devices 9 and 10 are respectively provided. Also in this case, the first and the second output aeration vent 72 and 74 and the second input aeration vent 73a are preferably provided with protection grids to prevent foreign matters from reaching the cooling fan 5 of the lighting body 1a and the ventilating devices 9 and 10.

The first air flow AF1 enters the box 7 at the first input aeration vent 71a, removes heat from the common end 2a of the optical fibre bundle 3a and from the casing 6 of the lighting body 1a and exits from the box 7 at the first output aeration vent 72, similarly to what already described in connection with the embodiment having two lighting bodies. The second air flow AF2 enters the box 7 at the second input aeration vent 73a, is directed, through a connection duct, in the casing 6 of the lighting body 1a, where it directly removes the heat emitted by the light source 4, and from this it is directed, through a connection duct, to the second output aeration vent 74.

In both of the above described embodiments, the box 7 is preferably thermally insulated. The thermal insulation may be obtained by internally covering the walls of the box 7 with a layer 11 of a heat-insulating material, preferably fibre ceramic, as shown in figures 1-4, or by making the walls themselves in a material having low thermal conductivity. The box 7 is also provided with a removable cover 12, allowing an easy access to the components therein. In operating conditions, the cover 12 may be stably fixed to the box 7 through locking means 13 of conventional type.

Figures 5 and 6 show a display case 200 provided with the lighting device 100. The display case 200 is represented here in the form of an island-type display case, but the lighting device 100 may also be advantageously employed in other types of display cases, for example wall, table, hanging or suspended display cases. The display case 200 essentially comprises a base 201 and a display volume 202, defined above the base 201 and bound by glass walls. The display volume 202 is tight-sealed with respect to the outside and with respect to the base 201, for maintaining controlled climatic conditions therein. The base 201 is typically used as a technical space where various service devices for the display case are placed, in particular the box 7 of the lighting device 100. One or more optical fibre bundles, according to the configuration of the lighting device 100, depart from the box 7 and have free ends suitably made to enter within the display volume 202 in order to supply the desired lighting. The first and the second output aeration vent 72 and 74 of the box 7 are connected, respectively by means of the first and second output aeration duct 720 and 740, with the outside of the display case 200, so that the first and second air flow AF1 and AF2 exiting from the box 7 are not dispersed in the base 201. The output aeration ducts 720, 740 may be rigid or flexible and are in any case of conventional type. It is possible, however, to avoid the use of one or both output aeration ducts 720, 740 if the box 7 may be positioned inside the base 201 so that the first and/or second output aeration vent 72, 74 are directly in contact with the perimeter walls of the base 201.

## Claims

1. Lighting device (100) for a display case (200), comprising a lighting body (1a,1b) and a common end (2a,2b) of an optical fibre bundle (3a,3b) optically connected to said lighting body (1a,1b), **characterised in that** it comprises:
- a box (7) which encloses said lighting body (1a,1b) and said common end (2a,2b), and
- aeration means (9,10,71a,71b,72,73a,73b,74,720,740) provided for the passage through said box (7) of at least one air flow (AF1, AF2) for absorbing heat emitted by said lighting body (1a,1b) and by said common end (2a,2b) and for the transfer of said at least one air flow (AF1,AF2) outside said display case (200).

2. Lighting device (100) according to claim 1, wherein said aeration means (9,10,71a,71b,72,73a,73b,74,720,740) comprise a first input aeration vent (71a) and a first output aeration vent (72) formed in said box (7) for the passage of a first (AF1) of said at least one air flow (AF1, AF2) through said box (7).

3. Lighting device (100) according to claim 2, wherein said aeration means (9,10,71a,71b,72,73a,73b,74,720,740) comprise a first output aeration duct (720) for connecting said first output aeration vent (72) with the outside of said display case (200).

4. Lighting device (100) according to claim 2 or 3, wherein said aeration means (9,10,71a,71b,72,73a,73b,74,720,740) comprise a first ventilating device (9) at said first output aeration vent (72).

5. Lighting device (100) according to any one of the claims from 2 to 4, wherein said first input aeration vent (71a) is formed in said box (7) in proximity to an opening (31a) for the passage of said optical fibre bundle (3a).

6. Lighting device (100) according to any one of the claims from 2 to 5, wherein said lighting body (1a) comprises a light source (4), a casing (6) and a pair of cooling openings (61a,61b) formed in said casing (6) for the cooling of the light source (4), and wherein said aeration means (9,10,71a,71b,72,73a,73b,74,720,740) comprise a second input aeration vent (73a) and a second output aeration vent (74) formed in said box (7) and in fluid communication with said pair of cooling openings (61a,61b) for the passage through said box (7) and said casing (6) of a second (AF2) of said at least one air flow (AF1, AF2).

7. Lighting device (100) according to claim 6, wherein said aeration means (9,10,71a,71b,72,73a,73b,74,720,740) comprise a second output aeration duct (740) for connecting said second output aeration vent (74) with the outside of said display case (200).

8. Lighting device (100) according to claim 6 or 7, wherein said aeration means (9,10,71a,71b,72,73a,73b,74,720,740) comprise a second ventilating device (10) at said second output aeration vent (74).

9. Lighting device (100) according to claim 1, comprising two lighting bodies (1a,1b) and two common ends (2a,2b) of two optical fibre bundles (3a,3b), said common ends (2a,2b) being optically connected to said two lighting bodies (1a,1b), wherein said aeration means (9,10,71a,71b,72,73a,73b,74,720,740) comprise two first input aeration vents (71a,71b) and one first output aeration vent (72) formed in said box (7) for the passage of a first (AF1) of said at least one air flow (AF1,AF2) through said box (7).

10. Lighting device (100) according to claim 9, wherein said aeration means (9,10,71a,71b,72,73a,73b,74,720,740) comprise a first output aeration duct (720) for connecting said first output aeration vent (72) with the outside of said display case (200).

11. Lighting device (100) according to claim 9 or 10, wherein said aeration means (9,10,71a,71b,72,73a,73b,74,720,740) comprise a first ventilating device (9) at said first output aeration vent (72).

12. Lighting device (100) according to any one of the claims from 9 to 11, wherein said two first input aeration vents (71a,71b) are formed in said box (7) in proximity to openings (31a, 31b) for the passage of said two optical fibre bundles (3a,3b).

13. Lighting device (100) according to any one of the claims from 9 to 12, wherein said two lighting bodies (1a,1b) comprise respective light sources (4), respective casings (6) and respective pairs of cooling openings (61a,62a,61b,62b) formed in said casings (6) for the cooling of the light sources (4), and wherein said aeration means (9,10,71a,71b,72,73a,73b,74,720,740) comprise two second input aeration vents (73a,73b) and one second output aeration vent (74) formed in said box (7) and a manifold (8), said two second input aeration vents (73a,73b) and said manifold (8) being in fluid communication with said pairs of cooling openings (61a, 62a, 61b, 62b) formed in said casings (6) and said second output aeration vent (74) being in fluid communication with said manifold (8) for the passage through said box (7) and said casings (6) of a second (AF2) of said at least one air flow (AF1,AF2).

14. Lighting device (100) according to claim 13, wherein said aeration means (9,10,71a,71b,72,73a,73b,74,720,740) comprise a second output aeration duct (740) to connect said second output aeration vent (74) with the outside of said display case (200).

15. Lighting device (100) according to claim 13 or 14, wherein said aeration means (9,10,71a,71b,72,73a,73b,74,720,740) comprise a second ventilating device (10) at said second output aeration vent (74).

16. Lighting device (100) according to any one of the previous claims, wherein said box (7) is thermally insulated.

17. Lighting device (100) according to any one of the previous claims, wherein said box (7) comprises a removable cover (12).

18. Display case (200) comprising a lighting device (100) according to any one of the previous claims.

19. Display case (200) according to claim 18, comprising a display volume (202) defined above a base (201), wherein said lighting device (100) is housed in said base (201).
